# EUROPÄISCHE PATENTSCHRIFT

(11) **EP 2 810 986 B1**
(45) Veröffentlichungstag und Bekanntmachung des Hinweises auf die Patenterteilung: **19.04.2017**
(21) Anmeldenummer: 13002911.9
(22) Anmeldetag: 05.06.2013
(51) Int. Cl.: C08L 33/08, C08L 75/04

(54) **Thermoplastische Elastomerzusammensetzung und deren Verwendung**
Thermoplastic elastomer compound and its use
Composition en élastomère thermoplastique et son utilisation

(43) Veröffentlichungstag der Anmeldung: 10.12.2014
(73) Patentinhaber: Carl Freudenberg KG, 69469 Weinheim (DE); Unimatec Chemicals Europe GmbH & Co. KG, 69469 Weinheim (DE)
(72) Erfinder: Issel, Hans-Martin, 69469 Weinheim (DE); Naraki, Akihiro, Kamisohda, 319-1593 (JP); Klingshirn, Christoph L., 69214 Eppelheim (DE); Bieringer, Ruth, 64668 Rimbach (DE); Ecknig, Dirk, 68775 Ketsch (DE)

(56) Entgegenhaltungen:
- EP-A2- 0 420 017
- CN-A- 102 161 821
- DE-A1- 4 211 415
- JP-A- H0 224 343
- JP-A- H0 753 831
- JP-A- 2001 234 006

## Beschreibung

### Technisches Gebiet

Die Erfindung betrifft eine thermoplastische Elastomerzusammensetzung und deren Verwendung zur Herstellung von Formteilen, Spritzgußteilen, Extrudaten und Blasformteilen.

### Stand der Technik

Entsprechend der Struktur und Bindungsverhältnisse von Makromolekülen können Polymere in die Werkstoffgruppen der Elastomere, der Thermoplasten und der Duromere unterteilt werden. Eine weitere Werkstoffgruppe sind die thermoplastischen Elastomere. Thermoplastische Elastomere (TPE) sind Polymere, die die Gebrauchseigenschaften von Elastomeren und die Verarbeitungseigenschaften von Thermoplasten aufweisen.

Thermoplastische Elastomere auf Basis von Mischungen aus Dienkautschuken und Polyolefinen im Allgemeinen werden in der US 4 104 210, der US 4 130 535 und der US 4 311 628 beschrieben. Diese werden vor allem für Anwendungen bei Temperaturen unterhalb von 120°C eingesetzt.

Die DE 10 2008 038 280 A1 und die DE 10 2008 012 516 A1 offenbaren vernetzbare Zusammensetzungen auf der Basis mindestens eines Copolymers als thermoplastisches Elastomer und α-Olefin-Vinylacetat-Copolymeren mit einem Vinylacetatgehalt von ≥ 40 Gew.-%, wobei die Zusammensetzungen ein Peroxid als Vemetzungsinitiator enthalten.

Die EP 0 337 976 B1 und die EP 0 965 607 B1 beschreiben thermoplastische Elastomerzusammensetzungen auf Basis eines thermoplastischen Polyesterharzes und eines dynamisch vulkanisierten, kovalent vernetzten Acrylatkautschuks sowie ein Verfahren zur Herstellung eines vulkanisierten Blends.

Die EP 1 672 027 B1 zeigt eine thermoplastische Elastomerzusammensetzung aus einem polyamidbasierten Polymer und einem Acrylatkautschuk oder einem Nitril-copolymerisierten konjugierten Dienkautschuk. Die Herstellung erfolgt durch Einmischen des Kautschuks in das polyamidbasierte Polymer und anschließendes dynamisches Vernetzen des Kautschuks.

Die EP 0 594 854 B1 betrifft eine thermoplastische Elastomerzusammensetzung, umfassend thermoplastisches Copolyesterelastomer oder thermoplastisches Copolyamidelastomer und Methacrylat- oder Acrylatcopofymerkautschuk, der eine Epoxygruppe enthält, und Methacrylat- oder Acrylatcopolymerkautschuk, der eine Carboxylgruppe enthält.

Die EP 2 325 249 A1 beansprucht eine thermoplastische Elastomerzusammensetzung, die mindestens ein thermoplastisches Elastomer, ausgenommen thermoplastisches Polyurethan (TPU), und mindestens einen Füllstoff aus der Gruppe der Kieselsäuren, der gefällten Silikate oder der Ruße enthält.

Nachteilig an den zuvor beschriebenen thermoplastischen Elastomerzusammensetzungen ist, dass diese häufig eine nicht ausreichende Beständigkeit bei hohen Temperaturen und meist eine unzureichende Ölbeständigkeit aufweisen.

JP 2001 234006 A beschreibt ein thermoplastisches Elastomer, das neben einem PU- Elastomer Ethylenacrylat-Copolymer enthält. Nachteilig an ethylenhaltigen Copolymeren ist, dass diese unter Öleinfluss stark quellen.

CN 102 161 821 A beschreibt ein thermoplastisches Elastomer, welches unter anderem ein Polyurethan und Etriylen-Butylacrylat enthält. Nachteilig an der Verwendung von Ethylen-Butylacrylat (z. B. Lotryl®) ist, dass es eine hohe Glasübergangstemperatur von > 0°C aufweist und keine gummielastischen Eigenschaften zeigt.

JP H02 24343 A beschreibt ein thermoplastisches Elastomer, welches ein Polyurethan in Kombination mit einem ungesättigten Acrylsäure-Gummi und einem Vernetzungsmittel enthält. Nachteilig an einem ungesättigten Kautschuk ist, dass sich dieser durch eine geringe Hitzestabilität und Ozonbeständigkeit auszeichnet.

EP 0 420 017 A2 beschreibt schlagzäh modifizierte thermoplastische Polyurethan-Polyester-Formmassen, die, bezogen auf 100 Gew.-Teile (A) bis (C), enthalten:
- A) 30 bis 90 Gew.-Teile mindestens eines thermoplastischen Polyurethan-Elastomeren,
- B) 5 bis 65 Gew.-Teile mindestens eines thermoplastischen Polyesters, vorzugsweise ein Polyalkylenterophthalat, und
- C) 5 bis 30 Gew.-Teile mindestens eines Ethylencopolymeren, die vorteilhafterweise aufgebaut sind aus
- Ca) Ethylen,
   Cb) mindestens einem Alkyl(meth)acrylat mit 1 bis 8 C-Atomen in einem linearen oder verzweigten Alkylrest mit Ausnahme von tert.-Butyl-(meth)acrylat und
   Cc) mindestens einem weiteren Monomeren, das eine gegenüber dem thermoplastischen Polyurethan-Elastomeren (A) oder thermoplastischen Polyester (B) reaktive Gruppe gebunden enthält,
      sowie
- D) 0 bis 60 Gew.% mindestens eines faser- und/oder teilchenförmigen Füllstoffs und
- E) 0 bis 10 Gew.% mindestens eines Hilfsstoffes, wobei die Gewichtsprozente bezogen sind auf das Gewicht von (A) bis (C).

In diesem Dokument liegt der Anteil des Acrylatkautschuks unter 30 Gew.%. Nachteilig an einem geringen Anteil an Acrylatkautschuk ist, dass die Elastomerzusammensetzung eine geringe Ölbeständigkeit sowie Hitzebeständigkeit zeigt.

JP H07 53831 A beschreibt eine thermoplastische Elastomerzusammensetzung, umfassend ein Polyurethan in Kombination mit vernetzten Acrylsäuregummis sowie einem Copolymer aus Methacrylsäureester und Maleinsäuereimid.

DE 42 11 415 A1 beschreibt eine Folie oder Formkörper aus einem mehrphasigen thermoplastischen Kunststoff, der einen elastomermodifizierten Thermoplast, einen Modifikator und gegebenenfalls Verarbeitungshilfsmittel, Farbmittel, Stabilisatoren und andere übliche Zusatzstoffe enthält, wobei der elastomermodifizierte Thermoplast A ein Acrylnitril-Styrol-Acrylester-Copolymer (ASA) und/oder ein Acrylnitril-Ethylen-Propylen-Dien-Styrol-Copolymer (AES) ist und der Modifikator B einen Kristallinitätsgrad von weniger als etwa 25% aufweist und mit der Komponente A verträglich ist und ein Polycaprolacton (PCL), ein Ethylen-Ethylacrylat-Copolymer (EEA) und/oder ein EthylenVinylacetat-Kohlenmonoxid-Terpolymer (EVACO) darstellt, wobei das Mischungsverhältnis A : B 9 : 1 bis 1 : 1 beträgt. Die Komponente ASA ist kein Kautschuk, da ASA keine Vernetzungsstellen aufweist und seine Glasübergangstemperatur mit > 0 °C ziemlich hoch liegt.

### Darstellung der Erfindung

Der Erfindung liegt daher die Aufgabe zugrunde, eine thermoplastische Elastomerzusammensetzung anzugeben, die sich durch eine verbesserte Öl- und eine verbesserte Temperaturbeständigkeit auszeichnet mit besonders guten physikalischen Eigenschaften, insbesondere mit einer hohen Bruchdehnung. Des Weiteren soll sie einfach herstellbar sein sowie besonders gut zur Herstellung von Formteilen, Spritzgußteilen, Extrudaten und Blasformteilen geeignet sein.

Die vorliegende Erfindung löst die zuvor genannte Aufgabe durch die Merkmale des Patentanspruchs 1.

Die erfindungsgemäße thermoplastische Elastomerzusammensetzung umfasst eine Mischung aus Acrylatkautschuk und Polyurethans, wobei das Gewichtsverhältnis von Acrylatkautschuk zu Polyurethan 8:2 bis 5:5, beträgt und wobei der Acrylatkautschuk Ethylacrylat (EA), Butylacrylat (BA) und/oder Methoxyethylacrylat (MEA) umfasst..

Unter Acrylatkautschuk wird hier auch Polyacrylatkautschuk (ACM) und/oder Ethylen-Acrylat-Kautschuk (AEM) verstanden.

Acrylatkautschuk ist hier die Bezeichnung für ein vernetzbares bzw. vulkanisierbares Polymer, aus dem durch Vulkanisierten bzw. Vernetzern Elastomere hergestellt werden können, als auch die Bezeichnung für einen bereits vernetzten Acrylatkautschuk.

Polyurethane können je nach räumlicher Struktur hart und spröde, aber auch weich und elastisch sein. Die duromeren Polyurethane weisen auf gummiähnliche Weise räumlich vernetzte Bausteine auf, während die thermoplastischen Polyurethane linear aufgebaut und aufschmelzbar sind. Daher ist hier der Einsatz von thermoplastischen Polyurethanen bevorzugt. Die Materialkombination der beiden ausgewählten Basiskomponenten Acrylatkautschuk und Polyurethan zeigt eine unerwartet gute Verträglichkeit in der Schmelze während des Mischvorgangs. Hierdurch wird eine homogene Phasenmorphologie erhalten.

Die hieraus resultierende thermoplastische Elastomerzusammensetzung weist eine überraschend hohe Temperatur- und Medienbeständigkeit, insbesondere in Gegenwart von Ölen, auf.

Des Weiteren besitzt die erfindungsgemäße thermoplastische Elastomerzusammensetzung hervorragende physikalische Eigenschaften, wie eine hohe Bruchdehnung und eine hohe Zugfestigkeit, und sie altert langsamer als bekannte thermoplastische Elastomerzusammensetzungen.

Die erfindungsgemäße thermoplastische Elastomerzusammensetzung lässt sich auch gut mit formgebenden Verfahren, insbesondere mittels Extrusion-, Spritzgieß- und/oder Blasformverfahren, verarbeiten. Zudem können Materialüberschüsse, fehlerhafte Produkte oder auch Produktionsabfälle wiederverwertet und recycelt werden. Dies ermöglicht eine einfache, kostengünstige und materialsparende Herstellung von Bau- bzw. Formteilen mit thermoplatischen Elastomerzusammensetzungen.

Erfindungsgemäß beträgt das Gewichtsverhältnis von Acrylatkautschuk zu Polyurethan in der thermoplastischen Elastomerzusammensetzung 8:2 bis 5:5, weil dabei der Acrylatkautschuk besonders homogen in einer Matrix aus Polyurethan vorliegt.

Erfindungsgemäß werdenEthylacrylat (EA), Butylacrylat (BA) und/oder Methoxyethylacrylat (MEA) eingesetzt, insbesondere wegen deren Kälteflexibiltät und Ölbeständigkeit.

Der Acrylatkautschuk weist bevorzugt funktionelle Gruppen auf bzw. zur Vernetzung des Acrylatkautschuks sind bevorzugt Comonomere mitpolymerisert, die vorzugsweise ausgewählt sind aus halogenhaltigen Gruppen, wie beispielsweise Chlorvinylether oder Vinylchloracetat, aus Carbonsäuregruppen, wie zum Beispiel Acrylsäure, aus Hydroxygruppen, aus Epoxygruppen, wie zum Beispiel Allylglycidylether, und/oder aus deren Mischungen.

Gemäß einer weiteren bevorzugten Ausführungsform ist das Polyurethan durch Umsetzen eines Diisocyanats mit einem Polyol und einem Kettenverlängerungsmittel hergestellt.

Bevorzugte Diisocyanate sind ausgewählt aus Hexamethylendiisocyanat, 2-Methyl-1,5-pentamethylendiisocyanat, trans-Cyclohexan-1,4-diisocyanat, 4,4'-Dicyclohexylmethandiisocyanat, 2,4'-Dicyclohexylmethandiisocyanat, 2,2'-Dicyclohexylmethandiisocyanat, 1,4-Benzoldiisocyanat, 2,4-Toluodiisocyanat, 2,6-Toluodiisocyanat, 4,4'-Diphenylmethandiisocyanat, 2,4'-Diphenylmethandiisocyanat, 2,2'-Diphenylmethandiisocyanat, 3,3'-Dimethy-4,4'-biphenyldiisocynat, 4,4'-Diisocyanat-1,2-diphenylethan, 2,4'-Diisocyanat-1,2-diphenylethan, 2,2'-Diisocyanat-1,2-diphenylethan, 1,5-Naphtahalindiisocyanat und/oder deren Mischungen.

Das Polyol kann ausgewählt sein aus Polyesterpolyolen, Polylactonpolyolen, Polyetherpolyolen, Polythioetherpolyolen, Polyesteramidpolyolen, Polycarbonatpolyolen, Polyacetalpolyolen, Vinylpolymerpolyolen, Polycaprolactonpolyolen, Polyetherglykolen, Polyesterglykolen und/oder deren Mischungen. Bevorzugt handelt es sich bei den Polyolen um langkettige Diole.

Zweckmäßigerweise liegt das NCO/OH-Verhältnis im Polyurethan in einem Bereich von 0,90 bis 1,5, vorzugsweise in einem Bereich von 0,95 bis 1,1.

Als Kettenverlängerungsmittel für das Polyurethan kommen Diole, trifunktionelle oder höherfunktionelle Alkohole, Diamine, höherfunktionelle Amine, Aminoalkohole und/oder deren Mischungen in Betracht. Bevorzugt sind die Kettenverlängerungsmittel ausgewählt aus kurzkettigen Diolen.

Gemäß einer bevorzugten Ausführungsform weist das Polyurethan eine Schmelztemperatur im Bereich von 100 bis 250°C, vorzugsweise im Bereich von 150 bis 230°C, auf.

Bei den erfindungsgemäßen thermoplastischen Elastomerzusammensetzungen bevorzugt eingesetzte Vernetzungsmittel zur Vernetzung des Acrylatkautschuks sind ausgewählt aus Peroxiden, Schwefel, Diaminen, Polyaminen, Diamincarbamaten, Diolen, Polyolen, Diisocyanaten, Polyisocyanaten, Diepoxiden, Polyepoxiden, Diglycidylether, Triazinen, Methylendianilin, Dicarbonsäuren, Polycarbonsäuren und/oder deren Mischungen bzw. aus Stoffen, die die vorgenannten Stoffe freisetzen.

Besonders bevorzugte Vernetzungsmittel sind Schwefel, Hexamethylendiamincarbamat, Hexamethylendiamin, Octamethylendiamin und/oder 2,2-Bis[4-(4-aminophenoxy)phenyl]propane.

Das Vernetzungsmittel verbindet bzw. vernetzt die Monomere des Acrylatkautschuks stellenweise untereinander durch chemische Brücken.

In einer bevorzugten Ausführungsform ist zum Vernetzungsmittel des Acrylatkautschuks ein Aktivator eingesetzt, welcher ausgewählt ist aus Kaliumstearat, Natriumstearat, Natriumoleat, anderen Alkali- und Erdalkalisalzen von Fettsäuren, Zinkdithiophosphat, Zinkdibutyldithiocarbamat, Zinkdimethyldithiocarbamat, Eisendimethyldithiocarbamat, Di-ortho-toluylguanidin (DOTG), Diphenylguanidin (DPG), Dipentamethylenthiruamdisulfid, synthetischem Hydrotalcid, Diuron, Octadecyltriethylammoniumbromid, Octadecyltriethylphosphoniumbromid, Diazabicycloundecen (DBU), Diethylthioharnstoff, Ammoniumbenzoat, Trimercapto-S-triazin, Natrium-2-ethylhexanoat und/oder aus deren Mischungen.

Alternativ oder kumulativ zum Aktivator kann zum Vernetzungsmittel Peroxid ein Coagens eingesetzt sein, welches ausgewählt ist aus 2,4,6-Tris(allyloxy)-1,3,5-triazin (TAC), Triallylisocyanurat (TAIC), 1,2-Polybutadien, 1,2-Polybutadienderivaten, N,N'-Phenylenbismaleimid, Diacrylaten, Triacrylaten, insbesondere Trimethylpropantriacrylat, Dimethacrylaten und/oder Trimethacrylaten, insbesondere Trimethylolpropantrimethacrylat (TRIM).

Je nach Anwendungsgebiet kann die erfindungsgemäße thermoplastische Elastomerzusammensetzung zumindest einen Zusatzstoff enthalten, welcher ausgewählt ist aus Füllstoffen, Weichmachern, Verarbeitungshilfsmitteln, Alterungsschutzmitteln, Antioxidantien, Flammschutzmitteln, Farbstoffen, Pigmenten und/oder deren Mischungen.

Der Zusatzstoff kann die physikalischen Eigenschaften, wie beispielsweise die Zugfestigkeit oder die Bruchdehnung, der thermoplastischen Elastomerzusammensetzung erhöhen. Ferner können die Zusätze die Haptik und die Optik der thermoplastischen Elastomerzusammensetzung verbessern.

Beispielsweise können Füllstoffe das Volumen und/oder das Gewicht erhöhen und/oder die physikalischen Eigenschaften der Mischung verbessern. Bevorzugt ist der Füllstoff ausgewählt aus Carbonaten, Oxiden, Ruß, Graphit, Aktivkohle, Silikaten, Ton, Glimmer, Kieselerde, Kreide, Kaolin, Calciumsulfat, Bariumsulfat, Aluminiumhydroxid und/oder deren Mischungen.

Bevorzugt werden Füllstoffe in den Acrylatkautschuk eingebracht, um die Härte und Steifigkeit des Kautschuks zu beeinflussen. Zur Verbesserung der Zugfestigkeit wird als Füllstoff bevorzugt Ruß eingesetzt.

Die thermoplastische Elastomerzusammensetzung kann Weichmacher enthalten, ausgewählt aus Phthalatestern, Phosphaten, Trimellitatestern, Sulfonamiden und/oder deren Mischungen.

Gemäß einer bevorzugten Ausführungsform kann die thermoplastische Elastomerzusammensetzung ein Antioxidans enthalten, ausgewählt aus Polycarbodiimiden, substituierten Phenolen, substituierten Bisphenolen, Dihydrochinolin, Diphenylamin, Phenyl-Naphtylamin, Paraphenyldiamin Paraphenylendiamin, Benzimidazol und/oder deren Mischungen.

Das Mischen sowie die Aufarbeitung können sowohl diskontinuierlich als auch kontinuierlich erfolgen.

Das diskontinuierliche Mischen kann in Innenmischern mit ineinandergreifenden oder tangierenden Rotorgeometrien stattfinden, beispielsweise in Banbury-Mischem oder Farrelf-Mischern. Eine diskontinuierliche Herstellung ist besonders flexibel, insbesondere für den Fall, dass unterschiedliche thermoplastische Elastomerzusammensetzungen hergestellt werden sollen.

Alternativ bevorzugte kontinuierliche Mischvorrichtungen sind Schneckenmaschinen, insbesondere gleichsinnig drehende Doppelschneckenextruder; Einschneckenextruder, Mehrwellenextruder oder Buss-Cokneter. Hierbei erfolgt die Herstellung bei hohen Drehzahlen mit erhöhter Produktivität.

Zur Herstellung der erfindungsgemäßen thermoplastischen Elastomerzusammensetzung kann das Mischen von Acrylatkautschuk, Polyurethan und optionalen Zusatzstoffen in unterschiedlicher Reihenfolge durchgeführt werden. Dabei können der Acrylatkautschuk, das Polyurethan und der oder die Zusatzstoff(e) als Pellet, Granulat, Pulver oder Schmelze zudosiert werden.

Gemäß einer bevorzugten Ausführungsform werden zunächst die Zusatzstoffe mit dem Acrylatkautschuk vermischt und erwärmt. Zweckmäßigerweise findet ein Zerkleinern des Acrylatkautschuks und ein besonders homogenes Mischen von Acrylatkautschuk und den Zusatzstoffen z.B. im Innenmischer bei einer Drehzahl im Bereich von 50 bis 250 U/min statt.

Nach Zugabe des Polyurethans werden Temperatur und Drehzahl bevorzugt derart eingestellt bzw. erhöht, so dass in dem Polyurethan vorzugsweise nach vollständigem Aufschmelzen der Acrylatkautschuk dispergiert wird.

Die Vernetzung des Acrylatkautschuks mit dem Vernetzungsmittel kann während des Mischens in der Schmelze, das heißt in-situ, insbesondere nach dem Konzept der dynamischen Vernetzung, erfolgen.

Vorzugsweise wird das Mischen unter hohen Scherbedingungen durchgeführt.

Dies kann zum Beispiel in einem Innenmischer oder Doppelschneckenextruder erfolgen. Die Drehzahlen können je nach Aggregat zwischen 20 und 1200 U/min liegen. Bei einem Innenmischer liegen diese bevorzugt zwischen 50 und 250 U/min, bei einem Doppelschneckenextruder liegen diese bevorzugt zwischen 100 und 600 U/min.

Üblicherweise wird der Acrylatkautschuk gleichzeitig vernetzt und als feine Teilchen innerhalb der Polyurethanmatrix dispergiert. Besonders günstig ist, dass der Acrylatkautschuk aufgrund der unerwarteten Verträglichkeit zwischen dem Polyurethan und dem Acrylatkautschuk, besonders gleichmäßig in der Polyurethanmatrix verteilt werden kann.

Eine besonders homogene Verteilung des Acrylatkautschuks in der Polyurethanmatix resultiert bei einer Teilchengröße des Kautschuks im Bereich von 0,1 bis 50 µm, vorzugsweise im Bereich von 0,1 bis 20 µm. Das Mischen und/oder Vernetzen erfolgt vorzugsweise bei einer Temperatur im Bereich von 150 bis 250°C, vorzugsweise im Bereich von 200 bis 230°C.

Bei den zuvor genannten Vernetzungsparametem von Temperatur und Drehzahl wird der bevorzugt als Hauptkomponente vorgelegte Acrylatkautschuk vollständig von dem bevorzugt als Minoritätskomponente eingesetzten Polyurethan umgeben. Aufgrund der homogenen Verteilung des Acrylatkautschuks in der Polyurethanmatrix weist die thermoplastische Elastomerzusammensetzung insbesondere hervorragende Zugfestigkeiten und Bruchdehnungen auf.

Nach dem Mischen kann die thermoplastische Elastomerzusammensetzung mittels Laborwalzen zu Platten ausgewalzt werden. Dies erleichtert eine weitere Verarbeitung.

Aufgrund ihrer hervorragenden thermoplastischen Verarbeitbarkeit können die thermoplastischen Elastomerzusammensetzungen besonders gut mit thermoplastischen Verarbeitungsverfahren, insbesondere mittels Spritzgießen, Strangpressen, Formpressen, Extrusion, Blasformen, Spitzprägen und/oder Ossbergerverfahren, umgeformt werden.

Die erfindungsgemäße thermoplastische Elastomerzusammensetzung weist zudem bevorzugt einen Temperatureinsatzbereich bis +150°C auf.

Praktische Versuche haben gezeigt, dass die erfindungsgemäße thermoplastische Elastomerzusammensetzung aufgrund der hohen Temperaturstabilität eine besonders hohe Lebensdauer aufweist. Vorteilhafterweise kann die Alterung minimiert werden, so dass die erfindungsgemäße thermoplastische Elastomerzusammensetzung auch den hohen Anforderungen an Formteile beispielsweise für den Einsatzbereich in der Automobilindustrie standhält.

Die erfindungsgemäße thermoplastische Elastomerzusammensetzung weist bevorzugt eine Kälteflexibilität bis -40°C auf. Unter Kälteflexibilität wird die Glasübergangs- oder auch Einfriertemperatur verstanden bei der ein reversibler Übergang von einem visko- oder gummielastischen Zustand in einen harten nicht-kristallinen, glasartigen (amorphen) und spröden Zustand erfolgt.

Praktische Versuche haben ergeben, dass sich die erfindungsgemäße thermoplastische Elastomerzusammensetzung vorzugsweise durch eine höhere Zugfestigkeit auszeichnet als die bekannter thermoplastischer Elastomerzusammensetzungen. Die Zugfestigkeit ist die im Moment des Reißens erreichte Kraft bezogen auf den Ausgangsquerschnitt eines Prüfkörpers vor Beginn der Prüfung. Die erfindungsgemäße thermoplastische Elastomerzusammensetzung ist daher besonders mechanisch beanspruchbar. Die erfindungsgemäße thermoplastische Elastomerzusammensetzung weist vorzugsweise nach 70 Stunden Lagerung bei 150°C in Gegenwart von Heißluft und selbst nach 168 Stunden eine verbleibende Bruchdehnung bevorzugt von größer 100% auf, besonders bevorzugt von größer 150%, gemessen nach DIN 53504-S2. Die Bruchdehnung ist das prozentuale Verhältnis der im Moment des Reißens erreichten Verlängerung zur Ausgangslänge.

Die erfindungsgemäße thermoplastische Elastomerzusammensetzung zeichnet sich vorzugsweise sogar nach 70 Stunden Lagerung bei 150°C in Gegenwart von Öl (IRM 903) und selbst nach 168 Stunden durch eine verbleibende Bruchdehnung bevorzugt von größer 100% auf, besonders bevorzugt von größer 140%, gemessen nach DIN 53504-S2.

Bevorzugt weist die erfindungsgemäße thermoplastische Elastomerzusammensetzung eine Härte gemessen nach DIN 53505 von 60 bis 100 Shore A auf, weiter bevorzugt von 70 bis 95 Shore A.

Durch die ausgezeichneten Festigkeitswerte und die verbleibenden Dehnungen sowohl nach Heißluftalterung als auch nach Ölalterung bei jeweils 150°C lässt die erfindungsgemäße Elastomerzusammensetzung eine besonders hohe Lebensdauer erwarten.

Zweckmäßigerweise weist die erfindungsgemäße thermoplastische Elastomerzusammensetzung eine Volumenänderung in Öl (IRM 903) gemessen nach DIN ISO 1817 von weniger als 15% auf, vorzugsweise von ungefähr oder weniger als 10%. Aufgrund der geringen Volumenquellung in Öl wird eine Materialschädigung der thermoplastischen Elastomerzusammensetzung verhindert und die Lebensdauer erhöht. Dies ermöglicht eine Verwendung der erfindungsgemäßen thermoplastischen Elastomerzusammensetzung in einem Motor- oder Getriebebauteil, wobei diese in Kontakt mit Ölen stehen.

Die erfindungsgemäße thermoplastische Elastomerzusammensetzung kann einen Weiterreißwiderstand gemessen nach ISO 34-1 Methode A im Bereich von 1 bis 20 N/mm aufweisen, vorzugsweise im Bereich von 3 bis 15 N/mm. Der Weiterreißwiderstand ist ein Maß für die Empfindlichkeit von Elastomeren gegen das Weiterreißen von Schnitt- und Rissschädigungen.

Somit zeichnet sich die thermoplastische Elastomerzusammensetzung durch eine besonders hohe mechanische Beständigkeit aus.

Desweiteren kann die thermoplastische Elastomerzusammensetzung sogar nach 70 bzw. 168 Stunden Lagerung bei 150°C in Gegenwart von Heißluft einen Spannwert im Bereich von 2 bis 10 MPa aufweisen, gemessen nach DIN 53504-S2, bzw. nach 70 bzw. 168 Stunden Lagerung bei 150°C in Gegenwart von Öl einen Spannwert im Bereich von 2 bis ungefähr 5 MPa. Der Spannwert ist die für eine bestimmte Dehnung erforderliche Kraft bezogen auf den Anfangsquerschnitt.

Praktische Versuche haben ergeben, dass sich die thermoplastische Elastomerzusammensetzung sogar nach 70 bzw. 168 Stunden Lagerung bei 150°C in Gegenwart von Heißluft vorzugsweise durch eine Zugfestigkeit gemessen nach DIN 53504-S2 im Bereich von 1 bis 15 MPa auszeichnet bzw. nach 70 bzw. 168 Stunden Lagerung bei 150°C in Gegenwart von Öl eine Zugfestigkeit im Bereich von von 3 bis ungefähr 6,5 MPa. Die Zugfestigkeit ist die im Moment des Reißens erreichte Kraft bezogen auf den Ausgangsquerschnitt eines Prüfkörpers, vor Beginn der Prüfung.

Bevorzugt wird die erfindungsgemäße thermoplastische Elastomerzusammensetzung aufgrund ihrer ausgezeichneten physikalischen Eigenschaften, insbesondere ihrer ausgezeichneten Zugfestigkeit und Bruchdehnung, zur Herstellung von Formteilen, wie Spritzgußteilen, Extrudaten und/oder Blasformteilen, verwendet.

Wegen der vorstehenden Eigenschaften ist die erfindungsgemäße thermoplastische Elastomerzusammensetzung auch zur Herstellung von Schläuchen, Faltenbälgen, Dichtungen, Profilen, Folien und/oder Dämpfungselementen, insbesondere im Automobilbereich, geeignet.

Aufgrund ihrer ausgezeichneten Medienbeständigkeit und Temperaturbeständigkeit kann die erfindungsgemäße thermoplastische Elastomerzusammensetzung zur Herstellung von Antriebselemenenten in luft- oder medienführenden Bereichen im Motorraum oder im Getriebe Anwendung finden.

Weitere bevorzugte Einsatzgebiete der erfindungsgemäßen thermoplastischen Elastomerzusammensetzung sind die Verwendung zur Herstellung von Diaphragmen, Schläuchen, wie Automobilschläuchen, Ladeluftrohren, Luftansaugrohren, Kraftstoffleitungen, Bremsschläuchen, Ölkühlerschläuchen, Kurbelgehäuseentlüftungsschläuchen (Blow-by Schläuchen) und/oder Abgasrückführungsschläuchen, Dichtungen, insbesondere Radialwellendichtringen, Nutringen, O-Ringen, Dichtringen, Flachdichtungen, angespritzten Dichtungen und/oder Schaumdichtungen.

### Ausführung der Erfindung

Die erfindungsgemäße thermoplastische Elastomerzusammensetzung kann gemäß dem folgenden Verfahren hergestellt werden:
Die Herstellung von vier verschiedenen erfindungsgemäßen Elastomerzusammensetzungen wird beispielhaft im Folgenden gezeigt.

Ein Innenmischer vom Typ Rheomix OS® der Firma Haake wird auf 100°C vorgeheizt. Der Acrylatkautschuk und die Zusatzstoffe werden in das Mischaggregat gefüllt und bei einer Drehzahl von circa 100 U/min für circa sechs Minuten gemischt. Danach wird das Polyurethan mit einem Schmelzpunkt von etwa 180°C hinzugegeben und bei einer Drehzahl von circa 160 U/min auf eine Temperatur von circa 210°C gebracht. Bei dieser Temperatur schmilzt das Polyurethan auf und wird mit dem Acrylatkautschuk vermischt.

Nach vollständigem Aufschmelzen des Polyurethans und Vorvermischung aller Komponenten wird nach circa 3 Minuten das Vernetzungsmittel hinzugegeben.

Während bei einer Drehzahl von 150 U/min und einer Temperatur von 225°C eine Vernetzung des Acrylatkautschuks eintritt, werden die Kautschukpartikel durch mechanische Scherung der Kneterschaufeln auf eine Teilchengröße im Bereich von 0,1 bis 20 µm zerkleinert.

Obwohl bevorzugt ein höherer Volumenanteil von Acrylatkautschuk (Elastomerphase) vorhanden ist, tritt durch die niedrige Viskosität des Polyurethans (Thermoplastphase) nach circa drei Minuten eine Phaseninversion auf. Diese ist auch mikroskopisch nachweisbar. Das heißt, das bevorzugt als Hauptkomponente eingesetzte Acrylatkautschuk wird von dem bevorzugt als Minoritätskomponente eingesetzten Polyurethan vollständig umgeben. Die thermoplastische Elastomerzusammensetzung (thermoplastisches Vulkanisat) weist eine glatte Oberfläche auf und die Acrylatkautschukpartikel sind makroskopisch nicht mehr zu erkennen.

Nach circa 10 Minuten wird der Inhalt des Mischers bei einer Temperatur von circa 225°C ausgeworfen und auf einer Laborwalze zu dünnen Platten ausgewalzt. Die Platten werden mit einer Spritzgießmaschine (Typ Engel Combimelt Victory 200H/200L/80) zu Prüfkörpern der Dimensionen (100x100 mm Fläche und 2 bzw. 30 x 100mm und 6 mm Dicke) verarbeitet. Dabei lässt sich auch gleichzeitig überprüfen, ob ein geeignetes Verarbeitungsverhalten für das Spritzgussverfahren vorliegt.

Die genannten Mischungen werden aus den in Tabelle 1 aufgeführten Komponenten hergestellt. Die Einsatzmengen werden in Gewichtsteilen pro 100 Teile Acrylatautschuk angegeben.

**Tabelle 1:**

| Verschiedene erfindungsgemäße thermoplastische Elastomerzusammensetzungen | | | | | |
|---|---|---|---|---|---|
| | **Handelsnamen/ chemische Bezeichnung** | **1** | **2** | **3** | **4** |
| **Acrylatkautschuk** | Noxtite® AY1170 | 100 | 100 | 100 | 100 |
| **Ruß als Füllstoff** | Corax® N 550 | 40 | 40 | 50 | 68 |
| **Weichmacher** | Pristerene® 4931 (Stearinsäure) | 1 | 1 | 1 | 1,5 |
| **Weichmacher** | Rhenosin® W759 | | | | 8 |
| **Antioxidans** | Dusantox® 86 | 1,5 | 1,5 | 1,5 | 1,5 |
| **Verarbeitungshilfsmittel** | Vanfre® VAM (Polyoxyethylenoctadecyletherphosphat) | 0,5 | 0,5 | 0,5 | 0,5 |
| **Verarbeitungshilfsmittel** | Armeen® 18D | | | | 1,5 |
| **Aktivator** | Rhenogran® XLA 60 (1,8-Diazabicyclo(5.4.0)unde-cen-7-Zink-dialkyldithio-phosphat) | 1,5 | 1 | 1 | 1,2 |
| **Vernetzungsmittel** | Cheminox® AC-6C (Hexamethylendiamincarbamat) | 0,8 | 0,6 | 0,6 | 0,6 |
| **Polyurethan** | 94 AU 20889 | 62,3 | 62 | 66,3 | 98,4 |
| | Summe | 207,6 | 206,6 | 220,9 | 281,2 |

In der folgenden Tabelle 2 sind die physikalischen Eigenschaften und die elastomertechnologischen Prüfwerte von den erfindungsgemäßen thermoplastischen Elastomerzusammensetzungen bei Raumtemperatur dargestellt.

**Tabelle 2:**

| Physikalische Eigenschaften von den vier verschiedenen erfindungsgemäßen thermoplastischen Elastomerzusammensetzungen | | | | |
|---|---|---|---|---|
| **Beispiel** | **1** | **2** | **3** | **4** |
| Zugfestigkeit [MPa] | 3,2 | 4,3 | 5,2 | 9,3 |
| Bruchdehnung [%] | 153,8 | 164,7 | 136,3 | 192 |
| Spannwert 100% [MPa] | 2,6 | 3,2 | 4,7 | 6,5 |

| | | | | |
|---|---|---|---|---|
| (Zugfestigkeit, Bruchdehnung und Spannwert gemessen nach DIN 53504-S2) | | | | |

Die erfindungsgemäßen thermoplastischen Elastomerzusammensetzungen weisen hohe Bruchdehnungswerte auf.

In der folgenden Tabelle 3 werden verschiedene physikalischen Eigenschaften herkömmlicher thermoplastischer Elastomerzusammensetzungen mit der erfindungsgemäßen thermoplastischen Elastomerzusammensetzung (am Beispiel 4) bei Raumtemperatur und bei 150°C gemessen und verglichen.

**Tabelle 3:**

| Vergleich von physikalischen Eigenschaften einer erfindungsgemäßen thermoplastischen Elastomerzusammensetzung mit herkömmlichen aus dem Stand der Technik bekannten thermoplastischen Elastomerzusammensetzungen | | | |
|---|---|---|---|
| | **Beispiel** | **Vergleichsbeispiele** | |
| **physikalische Eigenschaften** | **4** | **Hipex® HX 81** | **Zeotherm® 100-70 B** |
| Härte [Shore A] | 80 | 79 | 69 |
| Spannwert 100% [MPa] | 6,5 | 7,3 | 5,1 |
| Zugfestigkeit [MPa] | 9,3 | 8,2 | 5,7 |
| Bruchdehnung [%] | 192 | 171 | 122 |
| Weiterreißwiderstand | 12,3 | 10,7 | 64,1 |
| | | | |
| **Eigenschaften bei 150°C** | | | |
| Zugfestigkeit [MPa] | 0,7 | 1.2 | 2 |
| Bruchdehnung [%] | 164 | 39 | 64 |

| | | | |
|---|---|---|---|
| (Härte gemessen nach DIN 53505; Spannwert, Zugfestigkeit und Bruchdehnung gemessen nach DIN 53504-S2; Weiterreißwiderstand gemessen nach ISO 34-1 Methode A) | | | |

Die thermoplastische Elastomerzusammensetzung Hipex® ist in der DE 10 2008 038 280 A1 und der DE 10 2008 012 516 A1 beschrieben.

Die thermoplastische Elastomer-Zusammensetzung Zeotherm® ist in der EP 1 672 027 B1 beschrieben.

Wie ein Vergleich der erfindungsgemäßen thermoplastischen Elastomerzusammensetzung mit den bekannten thermoplastischen Elastomerzusammensetzungen Hipex® und Zeotherm® zeigt, fällt insbesondere die bei 150°C gemessene Bruchdehnung der bekannten thermoplastischen Elastomerzusammensetzungen signifikant ab.

Eine elastische thermoplastische Elastomerzusammensetzung sollte, um für eine Anwendung im Motorraum geeignet zu sein, bei einer Temperatur von 150°C eine Bruchdehnung von über 100% aufweisen, bevorzugt von über 140%. Dies ist bei den erfindungsgemäßen thermoplastischen Elastomerzusammenselzungen der Fall.

Ferner wurde für die erfindungsgemäße thermoplastische Elastomerzusammensetzung, exemplarisch an der thermoplastischen Elastomerzusammensetzung des Beispiels 4 gezeigt, und für herkömmliche thermoplastische Elastomerzusammensetzungen die Medienbeständigkeit bei 150°C für unterschiedliche Verweilzeiten in Gegenwart von Luft und Öl (IRM 903) untersucht. Die erhaltenen physikalischen Eigenschaften sind in den Tabellen 4 und 5 aufgeführt.

**Tabelle 4:**

| Vergleich der physikalischen Eigenschaften einer erfindungsgemäßen thermoplastischen Elastomerzusammensetzung mit herkömmlichen aus dem Stand der Technik bekannten thermoplastischen Elastomerzusammensetzungen nach Lagerung in Gegenwart von Heißluft (150°C) | | | | |
|---|---|---|---|---|
| | | **Beispiel** | **Vergleichsbeispiele** | |
| **physikalische Eigenschaften** | | **4** | **Hipex® HX 81** | **Zeothrerm® 100-70 B** |
| | | | | |
| | Alterung in **Heißluft bei 150°C** | | | |
| nach 24 h | Härte [Shore A] | 82 | 74 | 73 |
| | Spannwert 100% [MPa] | 7,9 | 6,7 | 5,5 |
| | Zugfestigkeit [MPa] | 11,8 | 8 | 5,4 |
| | Bruchdehnung [%] | 189 | 184 | 103 |
| | | | | |
| nach 70 h | Härte [Shore A] | 83 | 76 | 74 |
| | Spannwert 100% [MPa] | 9,1 | 6,6 | - |
| | Zugfestigkeit [MPa] | 13,4 | 8,4 | 4,3 |
| | Bruchdehnung [%] | 182 | 202 | 84 |
| | | | | |
| nach 168 h | Härte [Shore A] | 83 | 79 | 74 |
| | Spannwert 100% [MPa] | 10 | 6,5 | 5,7 |
| | Zugfestigkeit [MPa] | 13,9 | 8,7 | 5,2 |
| | Bruchdehnung [%] | 162 | 210 | 96 |

| | | | | |
|---|---|---|---|---|
| (Härte gemessen nach DIN 53505; Spannwert, Zugfestigkeit und Bruchdehnung gemessen nach DIN 53504-S2) | | | | |

Bei der bekannten thermoplastischen Elastomerzusammensetzung Zeotherm® kann nach Heißluftalterung ein Abfallen der Spann- und Dehnungswerte zum Bruch führen. Damit ist ein Einsatz für Langzeitbelastungen in luftführenden Bauteilen nur eingeschränkt möglich.

**Tabelle 5:**

| Vergleich der physikalischen Eigenschaften einer erfindungsgemäßen thermoplastischen Elastomerzusammensetzung mit herkömmlichen aus dem Stand der Technik bekannten thermoplastischen Elastomerzusammensetzungen nach Lagerung bei 150°C in Gegenwart von Öl (IRM 903). | | | | |
|---|---|---|---|---|
| | | **Beispiel** | **Vergleichsbeispiele** | |
| **physikalische Eigenschaften** | | **4** | **Hipex® HX 81** | **Zeotherm® 100-70 B** |
| | | | | |
| | Beständigkeit in Öl (IRM 903) **bei 150°C** | | | |
| nach 24 h | Härte [Shore A] | 71 | 58 | 75 |
| | Spannwert 100% [MPa] | 5,1 | - | 5,9 |
| | Zugfestigkeit [MPa] | 7,1 | 3,1 | 5,9 |
| | Bruchdehnung [%] | 164 | 74 | 106 |
| | | | | |
| nach 70 h | Härte [Shore A] | 71 | 55 | 78 |
| | Spannwert 100% [MPa] | 4,8 | - | 5,9 |
| | Zugfestigkeit [MPa] | 6,5 | 2,7 | 5,9 |
| | Bruchdehnung [%] | 159 | 66 | 104 |
| | | | | |
| nach 168 h | Härte [Shore A] | 71 | 55 | 79 |
| | Spannwert 100% [MPa] | 5,1 | - | - |
| | Zugfestigkeit [MPa] | 6,6 | 2,3 | 5,8 |
| | Bruchdehnung [%] | 145 | 65 | 97 |

| | | | | |
|---|---|---|---|---|
| (Härte gemessen nach DIN 53505; Spannwert, Zugfestigkeit und Bruchdehnung gemessen nach DIN 53504-S2) | | | | |

**Tabelle 6:**

| Vergleich der Ölquellung einer erfindungsgemäßen thermoplastischen Elastomerzusammensetzung mit herkömmlichen aus dem Stand der Technik bekannten thermoplastischen Elastomerzusammensetzungen nach Lagerung bei 150°C in Gegenwart von Öl (IRM 903). | | | | |
|---|---|---|---|---|
| | | **Beispiel** | | **Vergleichsbeispiele** |
| **Quellung** | | **4** | **Hipex® HX 81** | **Zeotherm® 100-70 B** |
| | | | | |
| | in Öl (IRM 903) **bei 150°C** | | | |
| nach 24 h | Volumenänderung [%] | 12,4 | 65,1 | 4,9 |
| | | | | |
| nach 70 h | Volumenänderung [%] | 11,5 | 65,6 | 6,2 |
| | | | | |
| nach 168 h | Volumenänderung [%] | 10,1 | 65,3 | 6,0 |

| | | | | |
|---|---|---|---|---|
| (Volumenänderung gemessen nach DIN ISO 1817) | | | | |

Bei der bekannten thermoplastischen Elastomerzusammensetzung Hipex® kann eine erhöhte Ölquellung zur Materialschädigung führen. Diese Zusammensetzung eignet sich somit nicht für den dauerhaften Einsatz in ölführenden oder ölkontaktierenden Bauteilen im Motorraum oder Getriebe.

Überraschend konnte festgestellt werden, dass die erfindungsgemäße thermoplastische Elastomerzusammensetzung hervorragende physikalische Eigenschaften, insbesondere eine hohe Bruchdehnung und eine hohe Zugfestigkeit, aufweist. Insbesondere nach einer Langzeltalterung von einer Woche (168 Stunden) zeigt die erfindungsgemäße thermoplastische Elastomerzusammensetzung noch keine Schädigung. Die erfindungsgemäßen thermoplastischen Elastomerzusammensetzungen besitzen somit gegenüber Hitzeeinwirkung und in Gegenwart von Öl eine außergewöhnliche Medienbeständigkeit über einen langen Zeitraum.

## Patentansprüche

1. Thermoplastische Elastomerzusammensetzung, umfassend eine Mischung aus Acrylatkautschuk und Polyurethan, wobei das Gewichtsverhältnis von Acrylatkautschuk zu Polyurethan 8:2 bis 5:5, beträgt und wobei der Acrylatkautschuk Ethylacrylat (EA), Butylacrylat (BA) und/oder Methoxyethylacrylat (MEA) umfasst.

2. Thermoplastische Elastomerzusammensetzung nach einem der vorangegangenen Ansprüche, wobei der Acrylatkautschuk funktionelle Gruppen aufweist, ausgewählt aus halogenhaltigen Gruppen, Carbonsäuregruppen, Hydroxygruppen, Epoxygruppen und/oder deren Mischungen.

3. Thermoplastische Elastomerzusammensetzung nach einem der vorangegangenen Ansprüche, wobei das Polyurethan durch Umsetzen eines Diisocyanats mit einem Polyol und einem Kettenverlängerungsmittel hergestellt ist.

4. Thermoplastische Elastomerzusammensetzung nach Anspruch 3, wobei das Polyol ausgewählt ist aus Polyesterpolyolen, Polylactonpolyolen, Polyetherpolyolen, Polythioetherpolyolen, Polyesteramidpolyolen, Polycarbonatpolyolen, Poylacetalpolyolen, Vinylpolymerpolyolen, Polycaprolactonpolyolen, Polyetherglykolen, Palyesterglylcolen und/oder deren Mischungen.

5. Thermoplastische Elastomerzusammensetzung nach Anspruch 3, wobei das Kettenverlängerungsmittel ausgewählt ist aus Diolen, trifunktionellen oder höherfunktionellen Alkoholen, Diaminen, höherfunktionellen Aminen, Aminoalkoholen und/oder deren Mischungen.

6. Thermoplastische Elastomerzusammensetzung nach einem der vorangegangenen Ansprüche, wobei ein Vernetzungsmittel zur Vernetzung des Acrylatkautschuks eingesetzt ist, welches ausgewählt ist aus Peroxiden, Schwefel, Diaminen, Polyaminen, Diamincarbamaten, Diolen, Polyolen, Diisocyanaten, Polyisocyanaten, Diepoxiden, Polyepoxiden, Diglycidylether, Triazinen, Methylendianilin, Dicarbonsäuren, Polycarbonsäuren und/oder deren Mischungen bzw. aus Stoffen, die die vorgenannten Stoffe freisetzen.

7. Thermoplastische Elastomerzusammensetzung nach Anspruch 6, wobei zum Vernetzungsmittel ein Aktivator eingesetzt ist, welcher ausgewählt ist aus Kaliumstearat, Natriumstearat, Natriumoleat, anderen Alkali- und Erdalkalisalzen von Fettsäuren, Zinkdithiophosphat, Zinkdibutyldithiocarbamat, Zinkdimethyldithiocarbamat, Eisendimethyldithiocarbamat, Di-ortho-toluylguanidin (DOTG), Diphenylguanidin (DPG), Dipentamethylenthiruamdisulfid, synthetischem Hydrotalcid, Diuron, Octadecyltriethylammoniumbromid, Octadecyltriethylphosphoniumbromid, Diazabicycloundecen (DBU), Diethylthioharnstoff, Ammoniumbenzoat, Trimercapto-S-triazin, Natrium-2-ethylhexanoat und/oder aus deren Mischungen, und/oder wobei zum Vernetzungsmittel Peroxid ein Coagens eingesetzt ist, welches ausgewählt ist aus 2,4,6-Tris(allyloxy)-1,3,5-triazin (TAC), Triallylisocyanurat (TAlC), 1,2-Polybutadien, 1,2- Polybutadienderivaten, N,N'-Phonylenbismaleimid, Diacrylaten, Triacrylaten, insbesondere Trimethylpropantriacrylat, Dimethacrylaten und/oder Trimethacrylaten, insbesondere Trimethylolpropantrimethacrylat (TRIM).

8. Thermoplastische Elastomerzusammensetzung nach einem der vorangegangenen Ansprüche, wobei die thermoplastische Elastomerzusammensetzung zumindest einen Zusatzstoff umfasst, welcher
ausgewählt ist aus Füllstoffen, Weichmachern, Verarbeitungshilfsmitteln, Alterungsschutzmitteln, Antioxidantien, Flammschutzmitteln, Farbstoffen, Pigmenten und/oder deren Mischungen.

9. Thermoplastische Elastomerzusammensetzung nach einem der vorangegangenen Ansprüche, **gekennzeichnet durch** einen Temperatureinsatzbereich von -40°C bis +150°C.

10. Thermoplastische Elastomerzusammensetzung nach einem der vorangegangenen Ansprüche, **gekennzeichnet durch** eine verbleibende Bruchdehnung nach 70 bzw. 168 Stunden Lagerung bei 150°C in Gegenwart von Heißluft gemessen nach DIN 53504-S2 von größer 100%, bevorzugt von größer 150%.

11. Thermoplastische Elastomerzusammensetzung nach einem der vorangegangenen Ansprüche, **gekennzeichnet durch** eine verbleibende Bruchdehnung nach 70 bzw. 168 Stunden Lagerung bei 150°C in Gegenwart von Öl (IRM 903) gemessen nach DIN 53504-S2 von größer 100%, bevorzugt von größer 140%.

12. Thermoplastische Elastomerzusammensetzung nach einem der vorangegangenen Ansprüche, **gekennzeichnet durch** eine Härte gemessen nach DIN 53505 von 60 bis 100 Shore A, bevorzugt von 70 bis 95 Shore A.

13. Thermoplastische Elastomerzusammensetzung nach einem der vorangegangenen Ansprüche, **gekennzeichnet durch** eine Volumenänderung in Öl (IRM 903) gemessen nach DIN ISO 1817 von weniger als 15%, bevorzugt von weniger als 10%.

14. Thermoplastische Elastomerzusammensetzung nach einem der vorangegangenen Ansprüche, **gekennzeichnet durch** einen Weiterreißwiderstand gemessen nach ISO 34-1 Methode A im Bereich von 1 bis 20 N/mm, bevorzugt von 3 bis 15 N/mm.

15. Verwendung der thermoplastische Elastomerzusammensetzung nach einem der vorangegangenen Ansprüche zur Herstellung von Formteilen, Spritzgußteilen, Extrudaten und/oder Blasformteilen.

## Claims

1. Thermoplastic elastomer composition comprising a mixture of acrylate rubber and polyurethane, wherein the weight ratio of acrylate rubber to polyurethane is 8:2 to 5:5, and wherein the acrylate rubber comprises ethyl acrylate (EA), butyl acrylate (BA) and/or methoxyethyl acrylate (MEA).

2. Thermoplastic elastomer composition according to one of the preceding claims, wherein the acrylate rubber has functional groups selected from halogen-containing groups, carboxylic acid groups, hydroxy groups, epoxy groups and/or mixtures thereof.

3. Thermoplastic elastomer composition according to one of the preceding claims, wherein the polyurethane is produced by reacting a diisocyanate with a polyol and a chain extension agent.

4. Thermoplastic elastomer composition according to Claim 3, wherein the polyol is selected from polyester polyols, polylactone polyols, polyether polyols, polythioether polyols, polyester amide polyols, polycarbonate polyols, polyacetal polyols, vinyl polymer polyols, polycaprolactone polyols, polyether glycols, polyester glycols and/or mixtures thereof.

5. Thermoplastic elastomer composition according to Claim 3, wherein the chain extension agent is selected from diols, trifunctional or higher functional alcohols, diamines, higher functional amines, amino alcohols and/or mixtures thereof.

6. Thermoplastic elastomer composition according to one of the preceding claims, wherein a crosslinking agent is used for crosslinking the acrylate rubber which crosslinking agent is selected from peroxides, sulfur, diamines, polyamines, diamine carbamates, diols, polyols, diisocyanates, polyisocyanates, diepoxides, polyepoxides, diglycidyl ethers, triazines, methylenedianiline, dicarboxylic acids, polycarboxylic acids and/or mixtures thereof or from substances which release the aforementioned substances.

7. Thermoplastic elastomer composition according to Claim 6, wherein the crosslinking agent used is in combination with an activator which is selected from potassium stearate, sodium stearate, sodium oleate, other alkali metal and alkaline earth metal salts of fatty acids, zinc dithiophosphate, zinc dibutyldithiocarbamate, zinc dimethyldithiocarbamate, iron dimethyldithiocarbamate, di-ortho-tolylguanidine (DOTG), diphenylguanidine (DPG), dipentamethylenethiuram disulfide, synthetic hydrotalcite, diuron, octadecyltriethylammonium bromide, octadecyltriethylphosphonium bromide, diazabicycloundecene (DBU), diethylthiourea, ammonium benzoate, trimercapto-s-triazine, sodium 2-ethylhexanoate and/or mixtures thereof, and/or wherein the peroxide crosslinking agent is used in combination with a coagent which is selected from 2,4,6-tris(allyloxy)-1,3,5-triazine (TAC), triallyl isocyanurate (TAlC), 1,2-polybutadiene, 1,2-polybutadiene derivatives, N,N'-phenylenebismaleimide, diacrylates, triacrylates, in particular trimethylpropane triacrylate, dimethacrylates and/or trimethacrylates, in particular trimethylolpropane trimethacrylate (TRIM).

8. Thermoplastic elastomer composition according to one of the preceding claims, wherein the thermoplastic elastomer composition comprises at least one additive which is selected from fillers, plasticizers, processing aids, anti-aging agents, antioxidants, flame retardants, dyes, pigments and/or mixtures thereof.

9. Thermoplastic elastomer composition according to one of the preceding claims, **characterized by** an operating-temperature range from -40°C to +150°C.

10. Thermoplastic elastomer composition according to one of the preceding claims, **characterized by** a residual elongation at break after storage for 70 or 168 hours at 150°C in the presence of hot air measured in accordance with DIN 53504-S2 of greater than 100%, preferably of greater than 150%.

11. Thermoplastic elastomer composition according to one of the preceding claims, **characterized by** a residual elongation at break after storage for 70 or 168 hours at 150°C in the presence of oil (IRM 903) measured in accordance with DIN 53504-S2 of greater than 100%, preferably of greater than 140%.

12. Thermoplastic elastomer composition according to one of the preceding claims, **characterized by** a hardness measured in accordance with DIN 53505 of 60 to 100 Shore A, preferably of 70 to 95 Shore A.

13. Thermoplastic elastomer composition according to one of the preceding claims, **characterized by** a volume change in oil (IRM 903) measured in accordance with DIN ISO 1817 of less than 15%, preferably of less than 10%.

14. Thermoplastic elastomer composition according to one of the preceding claims, **characterized by** a tear-propagation resistance measured in accordance with ISO 34-1 Method A in the range from 1 to 20 N/mm, preferably from 3 to 15 N/mm.

15. Use of the thermoplastic elastomer composition according to one of the preceding claims, for producing moldings, injection moldings, extrudates and/or blow moldings.

## Revendications

1. Composition d'élastomère thermoplastique, comprenant un mélange de caoutchouc d'acrylate et de polyuréthane, le rapport en poids entre le caoutchouc d'acrylate et le polyuréthanne étant de 8:2 à 5:5, et le caoutchouc d'acrylate comprenant de l'acrylate d'éthyle (EA), de l'acrylate de butyle (BA) et/ou de l'acrylate de méthoxyéthoxyle (MEA).

2. Composition d'élastomère thermoplastique selon l'une quelconque des revendications précédentes, dans laquelle le caoutchouc d'acrylate comprend des groupes fonctionnels choisis parmi les groupes halogénées, les groupes acide carboxylique, les groupes hydroxy, les groupes époxy et/ou leurs mélanges.

3. Composition d'élastomère thermoplastique selon l'une quelconque des revendications précédentes, dans laquelle le polyuréthane est fabriqué par mise en réaction d'un diisocyanate avec un polyol et un agent d'allongement de chaîne.

4. Composition d'élastomère thermoplastique selon la revendication 3, dans laquelle le polyol est choisi parmi les polyester-polyols, les polylactone-polyols, les polyéther-polyols, les polythioéther-polyols, les polyesteramide-polyols, les polycarbonate-polyols, les polyacétal-polyols, les polymère de vinyle-polyols, les polycaprolactone-polyols, les polyéther-glycols, les polyester-glycols et/ou leurs mélanges.

5. Composition d'élastomère thermoplastique selon la revendication 3, dans laquelle l'agent d'allongement de chaîne est choisi parmi les diols, les alcools trifonctionnels ou d'une fonctionnalité supérieure, les diamines, les amines d'une fonctionnalité supérieure, les amino-alcools et/ou leurs mélanges.

6. Composition d'élastomère thermoplastique selon l'une quelconque des revendications précédentes, dans laquelle un agent de réticulation est utilisé pour la réticulation du caoutchouc d'acrylate, qui est choisi parmi les peroxydes, le soufre, les diamines, les polyamines, les carbamates de diamine, les diols, les polyols, les diisocyanates, les polyisocyanates, les diépoxydes, les polyépoxydes, les éthers diglycidyliques, les triazines, la méthylène-dianiline, les acides dicarboxyliques, les acides polycarboxyliques et/ou leurs mélanges, ou des matières qui libèrent les matières susmentionnées.

7. Composition d'élastomère thermoplastique selon la revendication 6, dans laquelle un activateur est utilisé pour l'agent de réticulation, qui est choisi parmi le stéarate de potassium, le stéarate de sodium, l'oléate de sodium, les autres sels alcalins et alcalino-terreux d'acides gras, le dithiophosphate de zinc, le dithiocarbamate de dibutyl-zinc, le dithiocarbamate de diméthyl-zinc, le dithiocarbamate de diméthyl-fer, la di-ortho-toluylguanidine (DOTG), la diphénylguanidine (DPG), le disulfure de dipentaméthylène-thiuram, l'hydrotalcite synthétique, le diuron, le bromure d'octadécyltriéthylammonium, le bromure d'octadécyltriéthylphosphonium, le diazabicycloundécène (DBU), la diéthylthiourée, le benzoate d'ammonium, la trimercapto-S-triazine, le 2-éthylhexanoate de sodium et/ou leurs mélanges, et/ou un co-agent est utilisé pour l'agent de réticulation peroxyde, qui est choisi parmi la 2,4,6-tris(allyloxy)-1,3,5-triazine (TAC), l'isocyanurate de triallyle (TAlC), le 1,2-polybutadiène, les dérivés de 1,2-polybutadiène, le N.N'-phénylène-bismaléimide, les diacrylates, les triacrylates, notamment le triacrylate de triméthylpropane, les diméthacrylates et/ou les triméthacrylates, notamment le triméthacrylate de triméthylolpropane (TRIM).

8. Composition d'élastomère thermoplastique selon l'une quelconque des revendications précédentes, dans laquelle la composition d'élastomère thermoplastique comprend au moins un additif, qui est choisi parmi les charges, les plastifiants, les adjuvants d'usinage, les agents antivieillissement, les antioxydants, les agents ignifuges, les colorants, les pigments et/ou leurs mélanges.

9. Composition d'élastomère thermoplastique selon l'une quelconque des revendications précédentes, **caractérisée par** une plage de température d'utilisation de -40 °C à +150 °C.

10. Composition d'élastomère thermoplastique selon l'une quelconque des revendications précédentes, **caractérisée par** un allongement à la rupture restant après 70 ou 168 heures de stockage à 150 °C en présence d'air chaud mesuré selon DIN 53504-S2 de plus de 100 %, de préférence de plus de 150 %.

11. Composition d'élastomère thermoplastique selon l'une quelconque des revendications précédentes, **caractérisée par** un allongement à la rupture restant après 70 ou 168 heures de stockage à 150 °C en présence d'huile (IRM 903) mesuré selon DIN 53504-S2 de plus de 100 %, de préférence de plus de 140 %.

12. Composition d'élastomère thermoplastique selon l'une quelconque des revendications précédentes, **caractérisée par** une dureté mesurée selon DIN 53505 de 60 à 100 Shore A, de préférence de 70 à 95 Shore A.

13. Composition d'élastomère thermoplastique selon l'une quelconque des revendications précédentes, **caractérisée par** une modification de volume dans de l'huile (IRM 903) mesurée selon DIN ISO 1817 de moins de 15 %, de préférence de moins de 10 %.

14. Composition d'élastomère thermoplastique selon l'une quelconque des revendications précédentes **caractérisée par** une résistance à la propagation d'une fissure mesurée selon ISO 34-1 méthode A dans la plage allant de 1 à 20 N/mm, de préférence de 3 à 15 N/mm.

15. Utilisation de la composition d'élastomère thermoplastique selon l'une quelconque des revendications précédentes pour la fabrication de pièces moulées, des pièces moulées par injection, d'extrudats et/ou de pièces moulées par soufflage.
